# EUROPÄISCHE PATENTSCHRIFT

(11) **EP 3 340 201 B1**
(45) Veröffentlichungstag und Bekanntmachung des Hinweises auf die Patenterteilung: **12.08.2020**
(21) Anmeldenummer: 17203324.3
(22) Anmeldetag: 23.11.2017
(51) Int. Cl.: G08C 17/02, H04L 12/28

(54) **VERFAHREN UND VORRICHTUNG ZUM BETREIBEN EINES HAUSHALTGERÄTS UND HAUSHALTGERÄT**
HOUSEHOLD APPLIANCE AND METHOD AND DEVICE FOR OPERATING A HOUSEHOLD APPLIANCE
PROCÉDÉ ET DISPOSITIF DE FONCTIONNEMENT D'UN APPAREIL MÉNAGER ET APPAREIL MÉNAGER

(30) Priorität: 23.12.2016 DE 102016125606
(43) Veröffentlichungstag der Anmeldung: 27.06.2018
(73) Patentinhaber: Miele & Cie. KG, 33332 Gütersloh (DE)
(72) Erfinder: Müller, Christoph, 32289 Rödinghausen (DE); Gey, Michael, 32130 Enger (DE)

(56) Entgegenhaltungen:
- DE-A1-102012 200 714
- DE-A1-102012 205 621
- DE-A1-102012 210 848

## Beschreibung

Die Erfindung betrifft ein Verfahren zum Betreiben eines Haushaltgeräts, eine Vorrichtung zum Betreiben eines Haushaltgeräts und ein Haushaltgerät.

Die DE 10 2013 104 976 A1 beschreibt ein System mit einem Haushaltsgerät und einer Kommunikationseinrichtung sowie ein Verfahren zum Betrieb eines solchen Systems. Aus der Druckschrift DE 10 2012 210 714 A1 ist ein Verfahren zur Kommunikation eines Haushaltgerätes mit einer Kommunikationsplattform in einem Netzwerk bekannt.

Druckschrift DE 10 1012 200 714 A1 beschreibt eine erste Anmeldung eines Haushaltgerätes an einer Kommunikationsplattform in einem Netzwerk um die Kommunikationsplattform als eine Fernsteuerung zu nutzen.

Die Druckschrift DE 10 2012 205 621 A1 zeigt ein Kochfeld und ein tragbares Multimediagerät, welche über zwei getrennte Funkstrecken miteinander kommunizieren. Der Erfindung stellt sich die Aufgabe ein verbessertes Verfahren zum Betreiben eines Haushaltgeräts, eine verbesserte Vorrichtung zum Betreiben eines Haushaltgeräts und ein verbessertes Haushaltgerät zu schaffen.

Erfindungsgemäß wird diese Aufgabe durch ein Verfahren zum Betreiben eines Haushaltgeräts, eine Vorrichtung zum Betreiben eines Haushaltgeräts und ein Haushaltgerät mit den Merkmalen der Hauptansprüche gelöst. Vorteilhafte Ausgestaltungen und Weiterbildungen der Erfindung ergeben sich aus den nachfolgenden abhängigen Ansprüchen.

Über eine drahtlose Verbindungstechnologie, wie beispielsweise WLAN können Daten über große Entfernungen übertragen werden. Das bedeutet, dass ein Haushaltgerät, wie beispielsweise ein Kochfeld oder Herd durch ein Mobilgerät angesteuert werden könnte, obwohl der Bediener das Haushaltgerät nicht unmittelbar unter Kontrolle hat.

Bei dem hier vorgestellten Ansatz wird die unmittelbare Anwesenheit des Bedieners sichergestellt, indem der Bediener am Haushaltgerät eine Aktion ausführt, um die Ansteuerung durch das Mobilgerät freizugeben.

Es wird ein Verfahren zum Betreiben eines Haushaltgeräts unter Verwendung eines Mobilgeräts vorgestellt, wobei das Verfahren die folgenden Schritte aufweist:
In dem Haushaltgerät Empfangen einer Verfahrensanweisung von dem Mobilgerät; und
Ansteuern des Haushaltgeräts entsprechend der Verfahrensanweisung, wobei die Verfahrensanweisung ansprechend auf ein durch einen Benutzer am Haushaltgerät ausgelöstes Freigabesignal ausgeführt wird.

Unter einem Haushaltgerät kann ein Gargerät, wie beispielsweise ein Herd, eine Mikrowelle oder ein Kochfeld verstanden werden. Das Haushaltgerät kann auch periphere Geräte umfassen, wie beispielsweise eine Dunstabzugshaube. Ein Mobilgerät kann beispielsweise ein Mobiltelefon, insbesondere ein Smartphone, ein Tablet, ein E-Reader oder auch eine für den speziellen Verwendungszweck vorgesehene Fernsteuerung sein. Eine Verfahrensanweisung kann eine Abfolge von nacheinander oder parallel auszuführenden Schritten zum Erreichen eines gewünschten Ergebnisses sein. Ein Schritt kann dabei beispielsweise eine einzustellende Leistungsstufe, eine zu erreichende Zieltemperatur, eine abzuwartende Dauer und/oder eine auszuführende Aktion beschreiben. Ein Freigabesignal repräsentiert durch eine ursächliche Aktion des Bedieners am Haushaltgerät die Anwesenheit des Benutzers beziehungsweise Bedieners im Umfeld des Haushaltgeräts.

Erfindungsgemäß wird die Verfahrensanweisung wird von dem Mobilgerät vor dem Auslösen des Freigabesignals an das Haushaltgerät übertragen. Für die Erfindung wesentlich ist, dass die Verfahrensanweisung in jedem Fall am Haushaltgerät erst ausgeführt wird wenn das Freigabesignal ausgelöst wurde.

Das Freigabesignal kann durch ein manuelles Bedienen eines Freigabeschalters am Haushaltgerät ausgelöst werden. Somit kann das Freigabesignal unter Verwendung eines manuell bedienbaren Freigabeschalter am Haushaltgerät ausgelöst werden. Daher kann der Benutzer im Moment des Bedienens maximal eine Armlänge entfernt von dem Haushaltgerät sein, wodurch sichergestellt ist, dass sich der Bediener in der Nähe des Haushaltgeräts aufhält. Bei dem Freigabeschalter kann es sich beispielsweise um einen mechanischen oder um einen sensorisch wirkenden Schalter handeln.

Das Freigabesignal kann auch durch ein Präsenzsignal eines Präsenzmelders am Haushaltgerät in Kombination mit einem durch eine Gestenerkennungseinrichtung erkannten Gestenbefehl ausgelöst werden. Eine Geste kann beispielsweise eine charakteristische Handbewegung sein. Die Geste kann in einem Erfassungsbereich der Gestenerkennungseinrichtung ausgeführt werden. Der Erfassungsbereich kann auf das Haushaltgerät ausgerichtet beziehungsweise begrenzt sein. Dadurch kann der Benutzer im Moment des Bedienens maximal eine Armlänge entfernt von dem Erfassungsbereich sein.

Ebenso kann das Freigabesignal durch ein Präsenzsignal eines Präsenzmelders am Haushaltgerät in Kombination mit einem durch eine Spracherkennungseinrichtung erkannten Sprachbefehl ausgelöst werden. Der Präsenzmelder kann einen Toleranzbereich aufweisen, innerhalb dessen er das Präsenzsignal bereitstellt. Der Präsenzmelder kann einen gerichteten Erfassungsbereich aufweisen. Beispielsweise kann der Präsenzmelder das Präsenzsignal bereitstellen, wenn der Benutzer in der Küche anwesend ist. Somit befindet sich das Haushaltgerät im Moment des Sprachbefehls unter Kontrolle des Bedieners.

Nach einer bevorzugten Ausführungsform hat das Haushaltgerät ein Bedienelement, insbesondere Taste, bei deren Betätigung eine Halten-Funktion ausgelöst oder aufgehoben wird. Bei ausgeöster Halten-Funktion werden alle Kochzonen auf einer kleinen Leistungsstufe, vorzugsweise auf der kleinsten Leistungsstufe betrieben. Wird die Halten-Funktion aufgehoben, werden die einzelnen Kochzonen mit den vor der Auslösung der Halten-Funktion eingestellten Leistungsstufen weiter betrieben.

Eine Weiterbildung der vorstehend erläuterten Ausführungsform des Haushaltgeräts sieht vor, dass das Bedienelement für die Halten-Funktion als Freigabeschalter für die am Haushaltgerät empfangene oder zu empfangende Verfahrensanweisung dient. Hierzu wird das Bedienelement für die Halten-Funktion nach dem Empfangen der Verfahrensanweisung, insbesondere für einen begrenzten Zeitraum, in den Freigabeschalter-Zustand versetzt. Dieser Freigabeschalter-Zustand, also die Bereitschaft eine empfangene Verfahrensanweisung freizuschalten, wird dem Bediener visuell angezeigt. Die Visualisierung erfolgt, indem eine Beleuchtungseinrichtung des Bedienelemente in einem definierten Muster blinkt, oder die Helligkeit regelmäßig variiert, z.B. pulsiert.

Gemäß einer Spezialisierung der vorstehend genannten Ausführungsform kann die Beleuchtungseinrichtung des Bedienelementes auch für die Visualisierung der Halten-Funktion genutzt werden. Hierbei ist vorgesehen, dass sich die Visualisierung der Halten-Funktion wesentlich von der Visualisierung des Freigabeschalter-Zustandes unterscheidet. Vorzugsweise wird die Beleuchtungseinrichtung in der Halten-Funktion in einem Dauerlicht betrieben. Eine Alternative hierzu ist, dass die Beleuchtungseinrichtung in der Halten-Funktion die Helligkeit regelmäßig variiert, z.B. pulsiert, während sie im Freigabeschalter-Zustand blinkt. Besonders bevorzugt wird im Freigabeschalter-Zustand die Beleuchtungseinrichtung mit einer höheren Helligkeit und/oder einer höheren Variations-Frequenz betrieben. Das Verfahren kann einen Schritt des Sendens einer Rückmeldung an das Mobilgerät aufweisen, wenn ein durch den Benutzer manuell auszuführender Schritt der Verfahrensanweisung auszuführen ist und/oder eine durch die Verfahrensanweisung definierte Vorbedingung erfüllt ist, wobei das Haushaltgerät weiter entsprechend der Verfahrensanweisung angesteuert wird, wenn ein Ausführen des manuellen Schritts und/oder ein Erhalt der Rückmeldung durch ein weiteres durch den Benutzer am Haushaltgerät ausgelöstes Freigabesignal bestätigt wird. Die Rückmeldung kann auch optisch und/oder akustisch durch das Haushaltgerät bereitgestellt werden. Durch die Interaktion mit dem Benutzer können auch komplexe Abläufe erfolgreich abgearbeitet werden. Durch die Rückmeldung und das erforderliche weitere Freigabesignal kann sichergestellt werden, dass sich der Benutzer weiterhin im Bereich des Haushaltgeräts aufhält.

Die Verfahrensanweisung kann gelöscht werden, wenn eine Auslösebedienung für das Freigabesignal später als ein Toleranzzeitraum nach dem Empfangen der Verfahrensanweisung erfolgt. Durch ein zeitnahes Löschen kann sichergestellt werden, dass das Freigabesignal nicht durch eine unbefugte Person ausgelöst wird.

Ansprechend auf das Löschen der Verfahrensanweisung kann eine Abbruchmeldung an das Mobilgerät gesendet werden. Dadurch kann der Benutzer gewarnt werden, seine Aufmerksamkeit auf das Haushaltgerät zu lenken.

Das Verfahren kann einen Schritt des Synchronisierens eines der Verfahrensanweisung zugeordneten Timers im Haushaltgerät mit einem Timer im Mobilgerät aufweisen. Ein Timer kann als Kurzzeitwecker bezeichnet werden. Der Timer zählt eine verbleibende Zeit bis zu einer in der Verfahrensanweisung hinterlegten Aktion herunter. Durch synchrone Timer kann der Benutzer kurzzeitig den Bereich des Haushaltgeräts verlassen, um beispielsweise Zutaten zu holen.

Ebenso kann das Verfahren einen Schritt des Übermittelns zumindest eines Betriebszustandswerts des Haushaltgeräts an das Mobilgerät aufweisen. Ein Betriebszustandswert kann beispielsweise eine eingestellte Leistungsstufe, eine aktuell erreichte Temperatur, eine Kerntemperatur und/oder eine Restmenge an Verbrauchsmaterial sein. Durch das Übermitteln des Betriebszustandswerts ist der Benutzer immer auf dem Laufenden.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Weiterhin wird ein Haushaltgerät mit einer Vorrichtung zum Betreiben des Haushaltgeräts gemäß dem hier vorgestellten Ansatz vorgestellt.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: ein Blockschaltbild eines Haushaltgeräts mit einer Vorrichtung zum Betreiben desselben gemäß einem Ausführungsbeispiel;
- Figur 2: eine Darstellung eines Ablaufs eines Verfahrens zum Betreiben eines Haushaltgeräts gemäß einem Ausführungsbeispiel; und
- Figur 3: ein Ablaufdiagramm eines Verfahrens zum Betreiben eines Haushaltgeräts gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

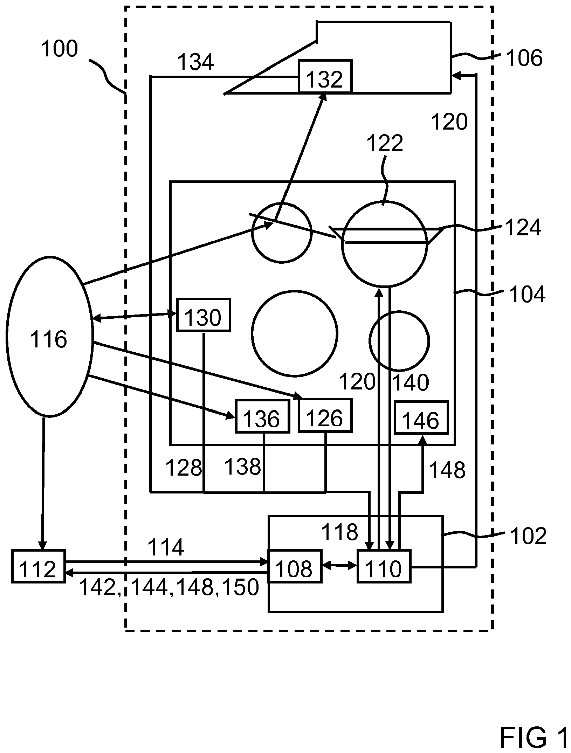

Figur 1 zeigt ein Blockschaltbild eines Haushaltgeräts 100 mit einer Vorrichtung 102 zum Betreiben des Haushaltgeräts 100 gemäß einem Ausführungsbeispiel. Das Haushaltgerät 100 ist hier ein Kochsystem und weist ein Kochfeld 104 und eine Dunstabzugshaube 106 auf. Die Vorrichtung 102 weist eine Schnittstelle 108 und eine Ansteuerungseinrichtung 110 auf. Die Schnittstelle 108 ist dazu ausgebildet, Kontakt zu einem Mobilgerät 112, beispielsweise einem Tablet oder Smartphone aufzubauen. Der Kontakt kann drahtlos hergestellt werden. Beispielsweise kann eine WLAN-Verbindung zu dem Mobilgerät 112 hergestellt werden. Ebenso kann der Kontakt direkt hergestellt werden, beispielsweise über ein hier nicht dargestelltes Dock, das auch zum Laden des Mobilgeräts 112 ausgebildet sein kann.

Über die Schnittstelle 108 empfängt die Vorrichtung 102 eine Verfahrensanweisung 114 von dem Mobilgerät 112. Die Verfahrensanweisung 114 beschreibt hier einen Verlauf eines durch einen Benutzer 116 ausgewählten Rezepts, welches unter Verwendung des Kochsystems 100 zubereitet werden soll. Dazu hat der Benutzer 116 beispielsweise in einer Rezeptapplikation auf dem Mobilgerät 112 das Rezept ausgewählt, eine zuzubereitende Menge angegeben und einen gewünschten Gargrad angegeben. Im Mobilgerät 112 wird die vordefinierte Verfahrensanweisung 114 des gewählten Rezepts entsprechend der Angaben des Benutzers 116 angepasst und anschließend an das Kochsystem 100 übertragen. In der Vorrichtung 102 wird die Verfahrensanweisung 114 zwischengespeichert.

Die Ansteuerungseinrichtung 110 beginnt die Verfahrensanweisung 114 abzuarbeiten, wenn ein durch den Benutzer 116 am Haushaltgerät 100 ausgelöstes Freigabesignal 118 empfangen wird. Ansprechend auf das Freigabesignal 118 steuert die Ansteuerungseinrichtung 110 das Haushaltgerät 100 durch Steuersignale 120 an. Beispielsweise wird eine zu verwendende Kochstelle 122 des Kochfelds 104 angesteuert und eine Leistungsstufe der Kochstelle 122 eingestellt, wenn ein Kochgeschirr 124 darauf erkannt wird. Ebenso kann über ein Steuersignal 120 die Dunstabzugshaube 106 angesteuert werden, um Wrasen entsprechend einem Zubereitungsfortschritt abzusaugen.

Das Freigabesignal 118 kann beispielsweise durch einen Freigabeschalter 126 am Kochfeld 104 bereitgestellt werden, wenn der Freigabeschalter 126 durch den Benutzer 116 betätigt wird. Durch die unmittelbare manuelle Betätigung kann die Anwesenheit des Benutzers 116 verifiziert werden. Der Freigabeschalter 126 kann als Sensorfläche ausgebildet sein.

Das Freigabesignal 118 kann auch durch eine Signalkombination aus einem Präsenzsignal 128 eines Präsenzmelders 130 des Haushaltgeräts 100 und einem von einer Gestenerkennungseinrichtung 132 des Haushaltgeräts 100 erkannten Gestenbefehl 134 oder einem von einer Spracherkennungseinrichtung 136 des Haushaltgeräts 100 erkannten Sprachbefehl 138 ausgelöst werden. Das Präsenzsignal 128 signalisiert dabei die Anwesenheit des Bedieners 116 im Umfeld des Haushaltgeräts 100. Die Gestenerkennungseinrichtung 132 kann beispielsweise erkennen, wenn der Benutzer 116 das Kochgeschirr 124 anfasst beziehungsweise bewegt, beispielsweise um das Kochgeschirr 124 auf die Kochstelle 122 zu stellen und so die Zubereitung einzuleiten. Während des Zubereitens kann die Gestenerkennungseinrichtung 132 erkennen, ob der Bediener 116 das Kochgeschirr 124 anfasst, um beispielsweise Fett oder Öl darin zu verteilen oder Gargut hineinzugeben.

Während des Abarbeitens der Verfahrensanweisung 114 können von der Vorrichtung 102 über die Schnittstelle 108 Informationen an das Mobilgerät 112 zurückgesendet werden.

Beispielsweise kann an der aktiven Kochstelle 122 ein Temperatursignal 140 abgegriffen werden und als Temperaturinformation 142 an das Mobilgerät 112 gesendet werden.

Wenn die Verfahrensanweisung 114 einen durch den Benutzer 116 auszuführenden Schritt enthält, kann eine Rückmeldung 144 an das Mobilgerät 112 gesendet werden, wenn der Schritt abzuarbeiten ist. Das Ausführen des Schritts kann wiederum durch ein weiteres Freigabesignal 118 quittiert werden. Beispielsweise erkennt die Gestenerkennungseinrichtung 132 die zugehörige Handlung des Benutzers 116 und stellt den entsprechenden Gestenbefehl 134 bereit. Die Rückmeldung kann auch optisch und/oder akustisch durch am Haushaltgerät 100 bereitgestellt werden.

Die Schritte der Verfahrensanweisung 114 können zeitkritisch sein. Um ein gewünschtes Ergebnis zu erreichen, kann ein näherungsweise sekundengenaues Handeln des Benutzers 116 erforderlich sein. Dazu steuert die Ansteuerungseinrichtung 110 in einem Ausführungsbeispiel einen Timer 146 beziehungsweise eine Zeitanzeige 146 über ein Timersignal 148 an. Das Timersignal 148 kann weiterhin über die Schnittstelle 108 an das Mobilgerät gesendet werden.

Wenn das Freigabesignal 118 ansprechend auf das Senden der Verfahrensanweisung 114 nach Ablauf einer maximalen Wartezeit nicht empfangen wird, wird die Verfahrensanweisung 114 verworfen. Das Verwerfen kann über ein Abbruchsignal 150 an das Mobilgerät 112 gemeldet werden.

Durch den hier vorgestellten Ansatz ist eine interaktive Nutzung, beispielsweise mit einer Applikation auf einem Smartphone, einer Sprachsteuerung und/oder einer Gestensteuerung im Sichtbereich möglich. Durch die Verwendung des am Hausgerät 100 durch eine Interaktion des Bedieners 116 ausgelösten Freigabesignals 118 kann auch bei Verwendung eines Funkstandards mit großer Reichweite sichergestellt werden, dass der Nutzer 116 sich im Sichtbereich des Kochfelds 104 befindet.

Dadurch können Applikationen mit interaktiven Rezepten umgesetzt werden. Beispielsweise kann, am Beispiel eines Steaks erklärt, der Bediener 116 in der Applikation ein Steak auswählen, das Gewicht eingeben und den Prozess starten. Im Anschluss sendet die Applikation aus einer hinterlegten Datenbank die Daten 114, wie beispielsweise eine Bratstufe, eine Gesamtdauer und einen Timer 146 als Signal zum Wenden an das Kochgerät 100. Dieses wird in einem Informationsstapel 114 gesendet. Das Kochgerät 100 sendet die Information 140 "erreichte Brattemperatur" zurück, damit der Nutzer 116 über die Applikation informiert wird, das Fleisch in die Pfanne 124 zu geben. Timer 146 werden zwischen Applikation und Kochfeld 104 synchron gehalten.

Die Anwesenheit des Benutzers 116 kann auch durch einen zweiten Kommunikationsweg, beispielsweise per Funkstandard mit niedriger Reichweite, wie den NFC-Standard sichergestellt werden, wenn dieser das Kochfeld 104 mit beispielsweise mit einer Applikation auf einem Smartphone 112 fernsteuert. Dazu ist ein Gerät 112 mit zwei Funkstandards zum Bedienen des Kochfelds 104 erforderlich. Dabei weist ein Funkstandard eine niedrige Reichweite auf. Andere Eingaben, wie beispielsweise Gestik oder Sprache werden damit ausgeschlossen, wenn nicht mindestens zwei Funkstandards enthalten sind, davon einer mit niedriger Reichweite.

Die Fernsteuerung im beaufsichtigten Betrieb ist durch den hier vorgestellten Ansatz auch mit mobilen Geräten 112, wie beispielsweise dem Smartphone 112 mit Übertragungsarten mit großer Reichweite, wie beispielsweise WLAN möglich.

Unabhängig von der Übertragungsart, beispielsweise Funk, Infrarot oder Schall, werden die Steuerungsinformationen 114 von der Quelle 112, beispielsweise einer Applikation als einzelne Information oder als Informationsstapel 114 an die Touchcontrol 102 gesendet.

Der hier vorgestellte Ansatz wir am Beispiel eines Steaks erklärt. Der Bediener 116 wählt in der Applikation ein Steak aus, gibt das Gewicht ein und startet den Prozess. Im Anschluss sendet die Applikation aus einer hinterlegten Datenbank die Daten 114, wie eine Bratstufe, eine Gesamtdauer für den Abschalttimer 146 und einen Kurzzeittimer 146 als Signal zum Wenden an das Kochgerät 100. Dieses wird in einem Informationsstapel 114 übermittelt.

Diese Kommandos 114 werden nicht sofort ausgeführt, sondern erst nach Bestätigung 118 am Kochfeld 104. Sämtliche Informationen werden vor Ausführung in einem Puffer in der Kochfeldsteuerung 102 zwischengespeichert. Die Bestätigung 118 und damit verbundene Ausführung der Kommandos 114 beziehungsweise des Informationsstapels 114 kann dabei auf unterschiedliche Weise erfolgen, beispielsweise durch einen Tastendruck, eine Geste oder Sprache. Die Freigabe 118 kann zusätzlich von weiteren Sensoren abhängig sein, wie beispielsweise einem Präsenzmelder 130.

Die Freigabetaste 126 kann als Protective Electronic Circuit (PEC) ähnlich einer Ein/Aus Taste im Kochfeld 104 betrachtet werden. Eine ähnliche Freigabe 118 kann durch Geste und/oder Sprache und Präsenzmelder 130 erreicht werden und kann durch redundante Systeme mit unterschiedlicher Sensorik 130, 132, 136 abgebildet werden. Dabei repräsentieren eine Geste und das Signal 128 vom Präsenzmelder 130 die Anwesenheit des Bedieners 116 am Kochfeld 104. Das Sicherheitsniveau ist dann ähnlich der PEC-Taste 126.

Die Freigabe 118 des Informationsstapels 114 in der Kochfeldsteuerung 102 kann nach einer Zeit X automatisch gelöscht werden, sofern die Ausführung nicht gestartet wurde. Dabei kann eine Rückinfo 150 an die Applikation und eine Info an den Nutzer 116 durch die Applikation erfolgen, dass das interaktive Rezept neu gestartet werden soll.

Das Kochgerät 100 sendet beispielsweise die Information 142 erreichte Brattemperatur zurück, damit der Nutzer 116 über die Applikation informiert wird, das Fleisch in die Pfanne 124 zu geben. Timer 146 werden zwischen der Applikation und dem Kochfeld 104 synchron gehalten. Grundsätzlich werden laufend alle Betriebszustände auf dem Kochfeld 104, wie beispielsweise eine Topferkennung, eine aktuelle Leistungsstufe, eine Pfannentemperatur und/oder ein Timer 146 an die Applikation übermittelt. Dadurch kann die Applikation interaktive Hinweise in Abhängigkeit zum Kochfeld und unter Berücksichtigung des ausgewählten Rezepts an den Nutzer 116 ausgeben. Weitere Informationen, wie beispielsweise ein Bratspieß beziehungsweise Bratenthermometer können zusätzlich in dem interaktiven Rezeptablauf berücksichtigt werden.

Die Ausführung des Informationsstapels 114 und die Bedienung durch externe Eingabe werden am Kochfeld 104 angezeigt. Beispielsweise durch ein zusätzliches Display. Eine visuelle Rückmeldung mit einem Symbol für die Anzeige der Fernbedienung kann ausreichend sein.

Das Haushaltgerät 100 weist ein vernetztes Kochfeld 104 auf. Auf dem Mobilgerät 112 läuft eine spezielle Softwareanwendung. Es sind weitere Eingaben an das Kochfeld 104 beispielsweise über Geste oder Sprache möglich. Dabei ist die Vernetzungstechnologie zwischen Eingabe und Kochfeld 104 nicht relevant.

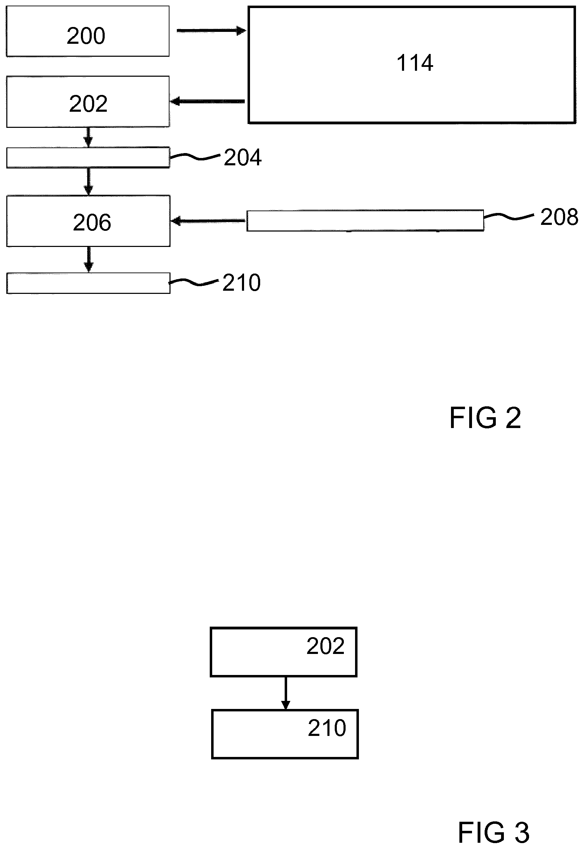

Figur 2 zeigt eine Darstellung eines Ablaufs eines Verfahrens zum Betreiben eines Haushaltgeräts gemäß einem Ausführungsbeispiel. Das Verfahren kann beispielsweise auf einem Mobilgerät und einem Haushaltgerät, wie sie in Figur 1 dargestellt sind, ausgeführt werden. In einem ersten Schritt 200 wird in einer Applikation auf dem Mobilgerät ein anzusteuernder Prozess ausgewählt. Dabei können Parameter des Prozesses gesetzt oder eingestellt beziehungsweise geändert werden. Im ersten Schritt 200 wird eine Verfahrensanweisung 114 generiert, die den parametrierten Prozess abbildet. Die Verfahrensanweisung 114 kann eine Vielzahl von nacheinander und gleichzeitig auszuführenden Schritten umfassen. Die Verfahrensanweisung 114 kann beispielsweise in Tabellenform mit Zeilen und Spalten erstellt werden. Beispielsweise können in den Spalten Informationen, wie "Byte", "Wert", "Inhalt" und "Beschreibung" hinterlegt sein. In den Zeilen können die aufeinander abfolgenden Befehle der Verfahrensanweisung 114 hinterlegt sein.

In einem zweiten Schritt 202 wird die Verfahrensanweisung 114 von dem Mobilgerät an das Haushaltgerät übertragen. Insbesondere kann die Verfahrensanweisung 114 drahtlos per Funk, Infrarot oder akustisch übertragen werden. Im Haushaltgerät wird die Verfahrensanweisung 114 in einem Schritt 204 des Speicherns zwischengespeichert. In einem Schritt 206 des Einlesens wird eine Freigabe der Verfahrensanweisung 114 durch den Nutzer am Haushaltgerät eingelesen. Die Freigabe kann dabei durch einen Sensor am Haushaltgerät oder eine Präsenzerkennung 208 und eine Geste am Haushaltgerät und/oder einen Sprachbefehl am Haushaltgerät erkannt werden. Wenn die Freigabe erteilt ist, kann die Verfahrensanweisung 114 in einem Schritt 210 des Ansteuerns ausgeführt werden.

Mit anderen Worten erfolgt im Schritt 200 die Fernsteuerung beispielsweise durch die Applikation, Sprache oder Gestik. Im Schritt 202 erfolgt die Übertragung der Kommandos 114 beispielsweise per Funk, Infrarot oder Akustik. Im Schritt 204 erfolgt die Zwischenspeicherung im Kochfeld. Im Schritt 206 erfolgt die Freigabe der Informationen 114 durch einen Sensor, Gestik oder Sprache am Kochfeld. Zuvor erfolgt die Präsenzerkennung durch die Freigabe 208 am Kochfeld durch den Nutzer. Im Schritt 210 erfolgt die Ausführung der Kommandos 114.

Figur 3 zeigt ein Ablaufdiagramm eines Verfahrens zum Betreiben eines Haushaltgeräts gemäß einem Ausführungsbeispiel. Das Verfahren entspricht dabei im Wesentlichen dem Verfahren in Figur 2. Hier sind die Schritte dargestellt, die von der Vorrichtung in Figur 1 ausgeführt werden. Die Vorrichtung führt den Schritt 202 des Empfangens und den Schritt 210 des Ansteuerns aus. Im Schritt 202 des Empfangens wird die Verfahrensanweisung von dem Mobilgerät empfangen. Im Schritt 210 des Ansteuerns wird das Haushaltgerät entsprechend der Verfahrensanweisung angesteuert. Dabei wird das Haushaltgerät erst angesteuert, wenn ein durch den Benutzer am Haushaltgerät ausgelöstes Freigabesignal eingelesen wird.

Durch den hier vorgestellten Ansatz kann ein Kochfeld unter Fernwirkung beeinflusst werden. Beispielsweise kann eine Fernbedienung beziehungsweise "Steuerung" des Kochfelds mit einem Smartdevice, wie einem Telefon, einem Pad oder einer Uhr erfolgen. Dabei kann eine Steuerung/Regelung, im Sinne eines oder mehrerer zusammenhängender Handlungsschritte, im Smartdevice bearbeitet oder zumindest bereitgestellt werden. Ein Rezept kann über das Internet geladen werden. Das Rezept enthält einerseits Angaben für den Benutzer, beispielsweise Mengenangaben einer Zutat, es enthält andererseits auch Angaben zur Steuerung/Regelung des Gargeräts beispielsweise des Kochfelds.

Mittels der App wird das Rezept ausgewählt, angepasst und/oder erstellt. Mittels der App wird der Datensatz zur Steuerung/Regelung des Gargerätes an das Gargerät übertragen.

Eine Fernwirkung findet nicht statt, da der Benutzer den Datensatz zur Steuerung/Regelung am Gargerät quittieren muss beziehungsweise zumindest den Beginn des in dem Datensatz zur Steuerung/Regelung hinterlegten Prozesses bestätigen muss.

Während des Prozesses können beispielsweise an sicherheitsrelevanten Stellen weitere Bestätigungen eingeholt werden. Solche Stellen können beispielsweise ein Hochschalten der Leistung von geringer Leistung auf höchste Leistung, ein Entfernen des Gargeschirrs vom Kochfeld und ein Wiederaufstellen, insbesondere nach Ablauf einer Mindestzeit, beispielsweise mehr als drei Sekunden sein.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren zum Betreiben eines Haushaltgeräts (100) unter Verwendung eines Mobilgeräts (112), wobei das Verfahren die folgenden Schritte aufweist:
Am Haushaltgerät (100) Empfangen (202) einer Verfahrensanweisung (114) von dem Mobilgerät (112);
**gekennzeichnet durch** ein
Ansteuern (210) des Haushaltgeräts (100) entsprechend der Verfahrensanweisung (114), wobei die Verfahrensanweisung (114) ansprechend auf ein Freigabesignal (118) ausgeführt wird, welches ausgelöst wird auf eine Aktion durch einen Benutzer (116) am Haushaltgerät (100),
wobei die Verfahrensanweisung (114) von dem Mobilgerät (112) vor dem Auslösen des Freigabesignals (118) an das Haushaltgerät (100) übertragen wird und die Verfahrensanweisung (114) in jedem Fall erst ausgeführt wird wenn das Freigabesignal (118) ausgelöst wurde.

2. Verfahren gemäß Anspruch 1, bei dem im Schritt (120) des Ansteuerns das Freigabesignal (118) unter Verwendung eines manuell bedienbaren Freigabeschalters (126) am Haushaltgerät (100) ausgelöst wird.

3. Verfahren gemäß einem der vorangegangenen Ansprüche, bei dem im Schritt (210) des Ansteuerns das Freigabesignal (118) durch ein Präsenzsignal (128) eines Präsenzmelders (130) am Haushaltgerät (100) in Kombination mit einem durch eine Gestenerkennungseinrichtung (132) erkannten Gestenbefehl (134) ausgelöst wird.

4. Verfahren gemäß einem der vorangegangenen Ansprüche, bei dem im Schritt (210) des Ansteuerns das Freigabesignal (118) durch ein Präsenzsignal (128) eines Präsenzmelders (130) am Haushaltgerät (100) in Kombination mit einem durch eine Spracherkennungseinrichtung (136) erkannten Sprachbefehl (138) ausgelöst wird.

5. Verfahren gemäß einem der vorangegangenen Ansprüche, mit einem Schritt des Sendens einer Rückmeldung (144) an das Mobilgerät (112), wenn ein durch den Benutzer (116) manuell auszuführender Schritt der Verfahrensanweisung (114) auszuführen ist und/oder eine durch die Verfahrensanweisung (114) definierte Vorbedingung erfüllt ist, wobei das Haushaltgerät (100) weiter entsprechend der Verfahrensanweisung (114) angesteuert wird, wenn ein Ausführen des manuellen Schritts und/oder ein Erhalt der Rückmeldung (144) durch ein weiteres durch den Benutzer (116) am Haushaltgerät (100) ausgelöstes Freigabesignal (118) bestätigt wird.

6. Verfahren gemäß einem der vorangegangenen Ansprüche, bei dem im Schritt (210) des Ansteuerns die Verfahrensanweisung (114) gelöscht wird, wenn das Freigabesignal (118) später als ein Toleranzzeitraum nach dem Empfangen der Verfahrensanweisung (114) ausgelöst wird.

7. Verfahren gemäß Anspruch 6, mit einem Schritt des Sendens, in dem ansprechend auf das Löschen der Verfahrensanweisung (114) eine Abbruchmeldung (150) an das Mobilgerät (112) gesendet wird.

8. Verfahren gemäß einem der vorangegangenen Ansprüche, mit einem Schritt des Synchronisierens eines der Verfahrensanweisung (114) zugeordneten Timers (146) im Haushaltgerät (100) mit einem Timer im Mobilgerät (112).

9. Verfahren gemäß einem der vorangegangenen Ansprüche, mit einem Schritt des Übermittelns zumindest eines Betriebszustandswerts (142) des Haushaltgeräts (100) an das Mobilgerät (112).

10. Vorrichtung (102) zum Betreiben eines Haushaltgeräts (100), die ausgebildet ist, um die Schritte des Verfahrens gemäß einem der vorangegangenen Ansprüche auszuführen.

11. Haushaltgerät (100), insbesondere Kochfeld (104), mit einer Vorrichtung (102) gemäß Anspruch 10.

12. System umfassend ein Haushaltgerät (100) gemäß Anspruch 11, welches eine Verfahrensanweisung empfängt und ein Mobilgerät (112), welches eine Verfahrensanweisung versendet.

13. Computer-Programmprodukt mit Programmcode zur Durchführung des Verfahrens nach einem der Ansprüche 1-9, wenn das Computer-Programmprodukt auf einer Vorrichtung nach Anspruch 10 ausgeführt wird.

## Claims

1. Method for operating a household appliance (100) using a mobile device (112), the method comprising the following steps:
receiving (202) a process instruction (114) from the mobile device (112) at the household appliance (100);
**characterized by** actuating (210) the household appliance (100) according to the process instruction (114), the process instruction (114) being carried out in response to an enabling signal (118) which is triggered by means of an action by a user (116) on the household appliance (100), the process instruction (114) being transmitted from the mobile device (112) to the household appliance (100) before the enabling signal (118) is triggered and the process instruction (114) not being carried out until the enabling signal (118) has been triggered.

2. Method according to claim 1, wherein, in the actuating step (120), the enabling signal (118) is triggered using a manually operated enabling switch (126) on the household appliance (100).

3. Method according to either of the preceding claims, wherein, in the actuating step (210), the enabling signal (118) is triggered by a presence signal (128) of a presence detector (130) on the household appliance (100) in combination with a gesture command (134) recognized by a gesture recognition device (132).

4. Method according to any of the preceding claims, wherein, in the actuating step (210), the enabling signal (118) is triggered by a presence signal (128) of a presence detector (130) on the household appliance (100) in combination with a voice command (138) recognized by a speech recognition device (136).

5. Method according to any of the preceding claims, comprising a step of sending a feedback message (144) to the mobile device (112) when a step of the process instruction (114) which is to be carried out manually by the user (116) is to be carried out and/or a prerequisite defined by the process instruction (114) is met, wherein the household appliance (100) is further actuated according to the process instruction (114) when execution of the manual step and/or receipt of the feedback message (144) is confirmed by a further enabling signal (118) triggered by the user (116) on the household appliance (100).

6. Method according to any of the preceding claims, wherein, in the actuating step (210), the process instruction (114) is deleted when the enabling signal (118) is triggered later than a tolerance period after the process instruction (114) is received.

7. Method according to claim 6, comprising a step of sending in which an abort message (150) is sent to the mobile device (112) in response to the deletion of the process instruction (114).

8. Method according to any of the preceding claims, comprising a step of synchronizing a timer (146) associated with the process instruction (114) in the household appliance (100) with a timer in the mobile device (112).

9. Method according to any of the preceding claims, comprising a step of transmitting at least one operating state value (142) of the household appliance (100) to the mobile device (112).

10. Apparatus (102) for operating a household appliance (100), which apparatus is designed to carry out the method steps according to any of the preceding claims.

11. Household appliance (100), in particular a hob (104), having an apparatus (102) according to claim 10.

12. System comprising a household appliance (100) according to claim 11, which receives a process instruction, and a mobile device (112), which sends a process instruction.

13. Computer program product, comprising program code for performing the method according to any of claims 1-9 when the computer program product is run on an apparatus according to claim 10.

## Revendications

1. Procédé pour faire fonctionner un appareil ménager (100) au moyen d'un dispositif mobile (112), le procédé comprenant les étapes :
de réception (202), au niveau de l'appareil ménager (100), d'une instruction de procédé (114) du dispositif mobile (112) ;
**caractérisé par** la commande (210) de l'appareil ménager (100) conformément à l'instruction de procédé (114), l'instruction de procédé (114) étant exécutée en réponse à un signal d'activation (118) qui est déclenché par une action d'un utilisateur (116) sur l'appareil ménager (100), l'instruction de procédé (114) étant transmise du dispositif mobile (112) à l'appareil ménager (100) avant le déclenchement du signal d'activation (118), et l'instruction de procédé (114) n'étant exécutée que lorsque le signal d'activation (118) a été déclenché.

2. Procédé selon la revendication 1, dans lequel, à l'étape de commande (120), le signal d'activation (118) est déclenché au moyen d'un commutateur d'activation (126) à commande manuelle se trouvant au niveau de l'appareil ménager (100).

3. Procédé selon l'une des revendications précédentes, dans lequel, à l'étape de commande (210), le signal d'activation (118) est déclenché par un signal de présence (128) d'un détecteur de présence (130) se trouvant au niveau de l'appareil ménager (100) en combinaison avec une commande gestuelle (134) reconnue par un dispositif de reconnaissance de gestes (132).

4. Procédé selon l'une des revendications précédentes, dans lequel, à l'étape de commande (210), le signal d'activation (118) est déclenché par un signal de présence (128) d'un détecteur de présence (130) se trouvant au niveau de l'appareil ménager (100) en combinaison avec une commande vocale (138) reconnue par un dispositif de reconnaissance vocale (136).

5. Procédé selon l'une des revendications précédentes, comprenant une étape d'envoi d'une réponse (144) au dispositif mobile (112) lorsqu'une étape de l'instruction de procédé (114) à exécuter manuellement par l'utilisateur (116) doit être exécutée et/ou lorsqu'une condition préalable définie par l'instruction de procédé (114) est remplie, l'appareil ménager (100) étant en outre commandé conformément à l'instruction de procédé (114) lorsque l'exécution de l'étape manuelle et/ou la réception de la réponse (144) est confirmée par un autre signal d'activation (118) déclenché par l'utilisateur (116) au niveau de l'appareil ménager (100).

6. Procédé selon l'une des revendications précédentes, dans lequel, à l'étape (210) de commande, l'instruction de procédé (114) est supprimée lorsque le signal d'activation (118) est déclenché après un délai de tolérance après la réception de l'instruction de procédé (114).

7. Procédé selon la revendication 6, comprenant en outre une étape d'envoi, dans laquelle un message d'interruption (150) est envoyé au dispositif mobile (112) en réponse à la suppression de l'instruction de procédé (114).

8. Procédé selon l'une des revendications précédentes, comprenant une étape de synchronisation d'une minuterie (146) associée à l'instruction de procédé (114) dans l'appareil ménager (100) à l'aide d'une minuterie dans le dispositif mobile (112).

9. Procédé selon l'une des revendications précédentes, comprenant une étape de transmission, au dispositif mobile (112), d'au moins une valeur d'état de fonctionnement (142) de l'appareil ménager (100).

10. Dispositif (102) pour faire fonctionner un appareil ménager (100) conçu pour exécuter les étapes du procédé selon l'une des revendications précédentes.

11. Appareil ménager (100), notamment plaque de cuisson (104), comportant un dispositif (102) selon la revendication 10.

12. Système comprenant un appareil ménager (100) selon la revendication 11, qui reçoit une instruction de procédé, et un dispositif mobile (112) qui envoie une instruction de procédé.

13. Produit de programme informatique comprenant un code de programme pour la mise en œuvre du procédé selon l'une des revendications 1 à 9 lorsque le produit de programme informatique est exécuté sur un dispositif selon la revendication 10.
